(19) Europäisches Patentamt
European Patent Office
Office européen des brevets

(11) **EP 2 422 289 B1**

(12) **EUROPEAN PATENT SPECIFICATION**

(45) Date of publication and mention
of the grant of the patent:
**08.06.2016 Bulletin 2016/23**

(51) Int Cl.:
***G06F 19/00*** *(2011.01)*     ***G05B 23/02*** *(2006.01)*
***G05B 19/042*** *(2006.01)*     ***G05B 19/00*** *(2006.01)*

(21) Application number: **10767410.3**

(22) Date of filing: **08.04.2010**

(86) International application number:
**PCT/US2010/001055**

(87) International publication number:
**WO 2010/123540 (28.10.2010 Gazette 2010/43)**

(54) **FIELD DEVICE WITH MEASUREMENT ACCURACY REPORTING**

FELDGERÄT MIT MESSGENAUIGKEITSBERICHT

DISPOSITIF DE TERRAIN AVEC RAPPORT DE PRÉCISION DE MESURE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **22.04.2009 US 386760**

(43) Date of publication of application:
**29.02.2012 Bulletin 2012/09**

(73) Proprietor: **Rosemount Inc.**
**Eden Prairie, Minnesota 55344-3695 (US)**

(72) Inventors:
• **LECUYER, Gregory Jacques**
**Eden Prairie, Minnesota 55347 (US)**
• **WEHRS, David L.**
**Eden Prairie, Minnesota 55346 (US)**
• **KENT, David J.**
**Climping**
**West Sussex BN17 5PQ (GB)**

(74) Representative: **Bohnenberger, Johannes et al**
**Meissner, Bolte & Partner GbR**
**Postfach 86 06 24**
**81633 München (DE)**

(56) References cited:
WO-A1-2008/039203     WO-A1-2008/151971
US-A1- 2001 034 582     US-A1- 2002 169 582
US-A1- 2003 236 643     US-A1- 2007 288 204
US-A1- 2008 270 162     US-B1- 6 200 443

EP 2 422 289 B1

**Description**

BACKGROUND

The present invention relates generally to field devices for use in industrial process control systems. More particularly, the present invention relates to field devices capable of providing a measurement value representing a measured process parameter and a measurement precision value representing measurement uncertainty of the process parameter.

Field devices include a broad range of process management devices designed to measure and control process parameters such as pressure, temperature, flow rate, level, conductivity, and pH. These devices have broad utility in a variety of industries, including manufacturing, hydrocarbon processing, hydraulic fracturing and other liquid hydrocarbon extraction techniques, bulk fluid handling, food and beverage preparation, water and air distribution, environmental control, and precision manufacturing applications for pharmaceuticals, glues, resins, thin films, and thermoplastics.

Field devices include process transmitters (which are configured to measure or sense process parameters) and process controllers (which are configured to modify or control such parameters in order to achieve a target value). More generalized field devices include multi-sensor transmitters such as pressure/temperature transmitters and integrated controllers with both sensor and control functionality. These generalized devices include integrated flow controllers and hydrostatic tank gauge systems, which measure and regulate a number of related process pressures, temperatures, fluid levels and flow rates.

Flowmeters and associated transmitters fill an important role in fluid processing, and they employ a wide variety of different technologies. These include, but are not limited to, turbine flowmeters that characterize flow as a function of mechanical rotation, differential pressure sensors that characterize flow as a function of pressure, mass flowmeters that characterize flow as a function of thermal conductivity, and vortex or Coriolis flowmeters that characterize flow as a function of vibrational effects, and magnetic flowmeters that rely upon the conductivity of the process fluid, such as water containing ions, and the electromotive force induced across the fluid as it flows through a region of magnetic field.

It is frequently desirable to perform checks or diagnostics of the process control loop to verify operation and performance of each field device within the control loop. More particularly, it is desirable to verify performance of each transmitter remotely from the control room without performing invasive procedures on the control loop or physically removing the transmitter from the control loop and industrial process control system. Currently, diagnostic capabilities are limited to obtaining information relating only to performance of the control loop and transmitter electronics. For example, the control room is able to initiate a test signal that originates from the transmitter electronics and then propagates throughout the control loop. The control room, knowing the magnitude and quality of the initiated test signal, can verify that the control loop and transmitter respond properly to the test signal. The control room thus mimics sensor output and checks that the electronics and control loop respond in kind. The control loop, however, is not able to verify functionality of the sensor, which can be affected by external influences and time. For example, the mimicked test signal does not verify if the sensor is undamaged and producing a valid pressure signal.

It is common for data representing the measurements made by field devices to be stored, so that it can later be reviewed. Paper charts, for example, may be used to show one or more of the process parameters as a function of time. The compiled data may also be made available to government regulatory bodies or to business interested parties (such as utility companies, commodity consumers, chemical manufacturers regulated by government agencies, and customers that are regulated by agencies such as the Food and Drug Administration and the Environmental Protection Agency). The compiled data does not, however, indicate the accuracy of the transmitter at the time that the measurements were made.

In terms of performance, engineers and buyers generally select field devices (e.g. process transmitters) based upon their published reference accuracy. When installed, the accuracy of measurement values from the field device will depend on a number of factors in addition to reference accuracy. These factors may include errors associated with the field device, as well as errors associated with a primary element (such as an orifice plate or a bluff body) used to create a measurable signal to be sensed by the field device. The errors may arise from temperature effects, line pressure effects, long term drift, and out-of-range (e.g. overpressure) exposure that affects calibration.

As a result, when a field device is in service, the actual operating accuracy is not known. Although the process should have a required performance (or allowable error) associated with measurement of process parameters, it has been difficult to determine whether the field devices are operating within those limits at any given time.

Document US 2008/270162 (A1) discloses the provision of sensor data that may be received from multiple sensors configured to sense properties of a process control system. The sensor data may include sensed values and uncertainty data corresponding to the sensed values. A new measurement associated with the process control system and corresponding uncertainty data for the new measurement may be determined based on the sensed values and uncertainty data received from the multiple sensors.

Document WO 2008/039203 (A1) discloses meter electronics for geometric thermal compensation in a flow meter. The meter electronics includes an interface configured to receive sensor signals and a temperature signal of the flow meter. The meter electronics further includes a processing system coupled with the interface and configured to receive the sensor signals and the temperature signal and compute a geometric thermal compensation factor for one or more flow conduits of the flow meter using the temperature signal. The geometric thermal compensation factor is used to process the first and second sensor signals.

SUMMARY

The present invention provides a field device according to independent claim 1. The present invention also discloses a method of measuring process parameters according to independent claim 9.

Further embodiments of the invention may be realised in accordance with the corresponding dependent claims.

A field device includes a sensor for sensing a process parameter, a processor for producing a measurement value as a function of the sensed process parameter, and a communication interface for transmitting an output based upon the measurement value. The processor also calculates a measurement precision value associated with the measurement value.

In one embodiment, the measurement precision value includes a total probable error and a stability error. In one example, the processor compares the measurement precision value to a stored required performance limit, and the communication interface provides an indication of whether the measurement precision value is within the required performance limit.

BRIEF DESCRIPTION OF THE DRAWINGS

FIG. 1 is a block diagram of a field device capable of real time computation of total probable error and stability error, and reporting a measurement precision value as an indication of real operating accuracy based upon the computation.

FIG. 2 is a flow diagram illustrating computation of total probable error and stability error by a field device.

DETAILED DESCRIPTION

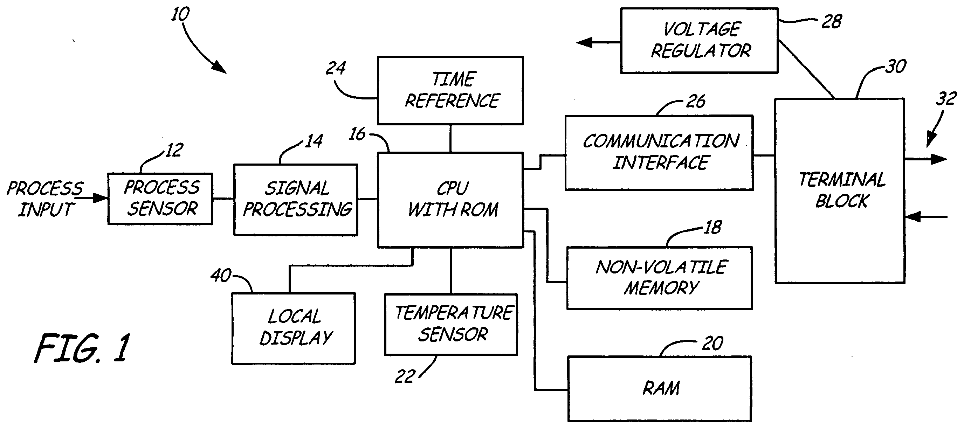

FIG. 1 is a block diagram illustrating field device 10, which includes process sensor module 12, signal processing circuitry 14, central processing unit (CPU) 16, non-volatile memory 18, random access memory (RAM) 20, temperature sensor 22, time reference circuit 24, communication interface 26, voltage regulator 28, and terminal block 30. Field device 10 is connected to communication medium 32 at terminal block 30. Communication medium 32 may be a two wire twisted pair capable of carrying an analog 4 to 20 milliamp current representative of a sensed process parameter as well as digital communication using, for example, the HART communication protocol. Alternatively, communication medium 32 may be a communication bus over which two way digital communication is provided using a communication protocol such as Foundation Fieldbus. Communication can also be provided by a wireless communication protocol such as wireless HART.

Process sensor module 12 senses a process parameter (or process variable) and provides a sensor signal to signal processing circuitry 14. The process parameter can be, for example, differential pressure, gage pressure, absolute pressure, temperature, flow rate, liquid level, conductivity, pH, or another process parameter of interest. In some cases, process sensor module 12 may include multiple sensors that sense multiple process parameters.

Signal processing circuitry 14 typically includes analog-to-digital conversion circuitry, as well as filtering and other signal processing to place sensor signal into a format that can be used by CPU 16. For example, signal processing circuitry 14 may include one or more sigma-delta analog-to-digital converters and digital filters to provide digitized and filtered sensor signals to CPU 16.

CPU 16 coordinates the operation of field device 10. It processes data received; it receives and stores sensor signals generated by process sensor module 12 and signal processing circuitry 14; and it generates measurement values that are provided through communication interface 26 and terminal block 30 onto communication medium 32. The measurement values represent values of the process parameter(s) sensed by process sensor module 12. In addition, CPU 16 uses temperature data from temperature sensor 22 and a time reference from time reference circuit 24, together with coefficients stored in non-volatile memory 18 to calculate measurement precision values, such as a total probable error (TPE) and a stability error (SE) associated with the measurement value. Upon a request received from the control room, the total probable error and the stability error can be reported over communication medium 32 or communicated as a secondary variable with each communication. In addition, another measurement precision value, the total calculated error, representing the sum of the total probable error and the stability error, can be compared by CPU 16 to a required performance limit stored in non-volatile memory 18. If the total calculated error exceeds the required performance, CPU 16 can cause an alert or an alarm to be generated and transmitted over communication medium 32. The determination of whether an alert or an alarm is generated can be a user choice that is stored in non-volatile memory 18.

CPU 16 may also monitor the sensor signals to determine whether an out-of-range condition has occurred that can impact measurement uncertainty. For example, exposure of a pressure sensor to a high overpressure condition can affect calibration, so that recalibration of field device 10 may be required earlier then ordinarily expected.

CPU 16 is typically a microprocessor with associated memory, such as non-volatile memory 18 and RAM 20. Other forms of memory, such as flash memory, may also be used in conjunction with CPU 16.

Non-volatile memory 18 stores application programming used by CPU 16, including programming required to perform a diagnostic routine to determine operating accuracy. Non-volatile memory 18 stores coefficients and constants used in calculation of total probable error and stability error, and the required performance limit. In addition, non-volatile memory 18 stores configuration data, calibration data, and other information required by CPU 16 to control operation of field device 10.

Temperature sensor 22 senses temperature within the housing of field device 10. The temperature sensed by temperature sensor 22 is used by CPU 16 in determining a temperature effect, which is a component of the total probable error.

Time reference 24 provides an operating time reference used in stability error calculation. Time reference 24 may provide a real time clock value, or may provide a time reference value representing a time elapsed since the last calibration of field device 10 or time elapsed since the field device was installed (service life).

Communication interface 26 serves as an interface of field device 10 with the loop or network formed by communication medium 32. Communication interface 26 may provide analog as well as digital outputs based upon data received from CPU 16. Communication interface 26 also receives messages from communication medium 32, and provides those messages to CPU 16.

Voltage regulator 28 is connected to terminal block 30, and derives regulated voltage used to power all components of field device 10. In the embodiment shown in FIG. 1, field device 10 transmits and receives information over a wired communication medium, and also receives power from communication medium 32. In other embodiments, field device 10 may be a wireless field device, in which case power may be supplied to voltage regulator 28 by a battery or energy scavenging device associated with field device 10, or from a wired power bus that does not carry communications. In that case, communication interface 26 will include a wireless transceiver.

The calculation of the measurement precision values associated with measurement values from field device 10 can be performed periodically or in response to particular events, such as each time a new measurement value is available. CPU 16 makes use of coefficients stored in non-volatile memory 18 in calculating total probable error TPE and stability error SE. The coefficients may be hard coded in ROM of CPU 16, or may be loaded in non-volatile memory 18 at the time of manufacture.

Total probable error ($\text{TPE}_\text{T}$) of field device 10 can be expressed as:

$$\text{TPE}_\text{T} = \sqrt{(\text{Rf.Acc})^2 + (\text{Temp.Effect})^2 + (\text{Static.Effect})^2} \qquad \text{Eq. 1}$$

Rf.Acc is the reference accuracy of the field device. The reference accuracy is a sensor specific value stored in non-volatile memory, which depends upon the current operating range of the field device. The current operating range can be defined in terms of an upper range limit and a range span that are stored in non-volatile memory 18 during configuration of field device 10.

Temp.Effect is an error component that varies as a function of the temperature of the field device. Temperature sensor 22 provides a temperature value to CPU 16. That temperature reading is applied to a coefficient stored in non-volatile memory 18 to yield error component Temp.Effect.

Static.Effect is an error component related to static line pressure. This error component will be present, for example, in field devices that provide measurement values relating to pressure or fluid flow. In other types of field devices, such as temperature transmitters, the static effect component is not present in the calculation of total probable error ($\text{TPE}_\text{T}$). For field devices having multiple parameter sensing capability (including sensing of static line pressure), Static.Effect may be calculated by multiplying a stored coefficient from non-volatile memory 18 times the measured static line pressure. For field devices without the ability to sense static line pressure, Static.Effect can be based upon a pre-entered user range value representing the range of static line pressure expected for an operation of a field device. This user range value will typically be entered and stored in non-volatile memory 18 during configuration of the field device. Alternatively, if a gage pressure transmitter is present on the same network as field device 10, static pressure could be received as an input over the network from the gage pressure transmitter.

For those field devices that are used in conjunction with a primary element, a calculation can also be performed to derive a total probable error associated with the primary element ($TPE_P$). In some cases, the total probable error of the primary element ($TPE_P$) can be larger than the total probable error of the field device ($TPE_T$). For example, if field device 10 is sensing differential pressure, a primary element in the form of an orifice plate will typically be used to create the differential pressure that is being sensed. A calculation of TPE for the primary element can be made, using a similar equation to Equation 1 including the Coefficient of Discharge CD. The particular coefficients used for Rf.Acc, Temp.Effect, and Static.Effect in calculating $TPE_P$, may be different than those used for calculating total probable error of the field device $TPE_T$.

Stability error (SE) is calculated based upon a stability error coefficient stored in non-volatile memory 18 and an operating time since last calibration, which is read by CPU 16 from time reference 24. The stability error will be calculated as follows:

$$SE = (Stability\_Error\_Coefficient) \times (Operating\_Time\_since\_last\_calibration)$$

$$Eq.\ 2$$

Total probable error of the field device $TPE_T$, total probable error of the primary element $TPE_P$, and stability error SE may be reported in response to a request received over communication medium 32, or may be reported in conjunction with each measurement value. In addition, a total calculated error TCE may also be computed and compared to a required performance limit, which represents the allowable error of the particular process in which field device 10 is being used.

Total calculated error TCE is the sum of the total probable errors and the stability error:

$$TCE = TPE_T + TPE_P + SE \qquad Eq.\ 3$$

In some cases, a primary element is not used, or a separate total probable error associated with the primary element is not calculated. In those cases, the total calculated error TCE is the sum of $TPE_T$ and SE.

The required performance limit is user selected, and can be entered at the time of configuration of field device 10. The required performance limit is specific to the particular process in which field device 10 is used, and may be different (e.g. less stringent) than the accuracy for the field device as specified by the manufacturer.

If the total calculated error is greater than the required performance limit, then field device 10 will provide an output in the form of either an alert or an alarm. The determination of whether an alert or an alarm should be generated can be selected by the user, with that selection being stored in non-volatile memory for use by CPU 16.

When total calculated error exceeds the required performance limit, recalibration of field device 10 is required. Once recalibration has been performed, the operating time since last calibration will be reset, and therefore the stability error SE is reinitialized upon recalibration.

There is another condition that can occur which will require recalibration even though total calculated error does not exceed the required performance limit. Field device 10 may be exposed to an out-of-range (e.g. overpressure) condition that affects calibration of the field device. This out-of-range condition is a field device-specific limit, rather than a process specific limit. In other words, an out-of-range pressure may result in a process alarm, and yet not require recalibration of the field device.

When a field device-specific out-of-range limit is exceeded, CPU 16 causes an alert or alarm to be generated indicating that calibration is needed. This can be the same alert or alarm used to indicate need for calibration because the total calculated error exceeds the required performance limit.

In addition to transmitting an alarm or alert, CPU 16 can also cause communication interface 26 to send a message indicating the estimated number of hours to the next calibration. The hours to next calibration can be estimated based upon the comparison of total calculated error to the required performance limit.

In some embodiments, field device 10 may also include local display 40 (shown in FIG. 1). Information presented on local display 40 can include total calculated error, total probable error of the field device or the primary element (or both), stability error, and hours to next calibration. Local display 40 may also include a bar graph and an indicator providing a countdown to next calibration. That countdown can be based upon the comparison of total calculated error to the required performance limit. Local display 40 may also include an indication of an out-of-range condition requiring immediate recalibration of the field device.

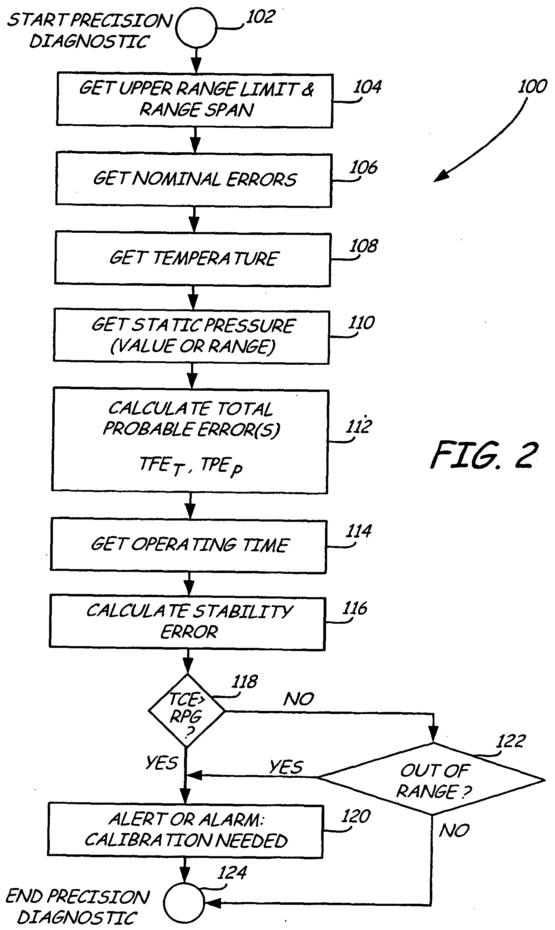

Figure 2 is a flow diagram that illustrates one embodiment of precision diagnostic 100 performed by CPU 16 in calculating measurement precision values of total probable error, stability error, and total calculated error. Precision diagnostic 100 starts either periodically, or as a result of a particular event, such as calculation of a new measurement value (step 102).

CPU 16 gets an upper range limit and a range span of field device 10 (step 104). The upper range limit and range span are values that are stored in non-volatile memory 18, and are entered either at the time of manufacture, or during field device configuration.

CPU 16 then gets nominal errors from non-volatile memory 18 (step 106). The nominal errors that are stored include a reference accuracy (Rf.Acc) coefficient, a temperature effect (Temp.Effect) coefficient, a static pressure effect (Static.Effect) coefficient, and a stability error (SE) coefficient. These coefficients will be used in calculation of total probable error and stability error.

CPU 16 then gets a temperature value from temperature sensor 22 (step 108). The temperature value represents internal temperature of field device 10. It will be used in calculating the temperature effect (Temp.Effect) component of total probable error of the field device ($TPE_T$).

CPU 16 then gets static pressure, which may be either a value or a range (step 110). The static pressure may be a measured value from one of sensors 12, or a value from another transmitter that measures static line pressure, or a range set during configuration of field device 10 by the user.

CPU 16 then calculates total probable error (step 112). In this calculation, CPU 16 uses non-volatile coefficients such as reference accuracy coefficient, temperature effect coefficient, and static pressure effect coefficient together with the temperature measurement, the static pressure, the upper range limit, and the span. In some embodiments, the static effect is not present (such as when field device 10 is a temperature transmitter). If a primary element is used in conjunction with field device 10, CPU 16 may perform calculations twice in order to calculate a total probable error for a field device $TPE_T$ and a total probable error for the primary element $TPE_P$.

CPU 16 then gets an operating time from time reference 24 (step 114). Then it calculates stability error (SE) using the stability error coefficient received from non-volatile memory 18 and the total operating time since last calibration (step 116).

Having calculated total probable error(s) and stability error, CPU 16 then sums total probable error(s) and stability error to yield total calculated error TCE. CPU 16 then compares TCE to the required performance limit RPL (step 118). If TCE is greater than the required performance limit, CPU 16 causes an alert or an alarm to be generated (step 120). The determination of whether an alert is generated or an alarm is generated will depend upon a user selection that is stored in non-volatile memory 18.

If TCE is less than or equal to the required performance limit, CPU 16 then determines whether an out-of-range condition (e.g., over pressure or over temperature) has occurred that would require recalibration (step 122). If an out-of-range condition has occurred, an alert or an alarm is generated (step 120). If an out-of-range condition has not occurred, or if the alert or alarm has been generated, precision diagnostic 100 ends (step 124).

By performing a real time calculation of total probable error(s) and stability error, field device 10 is capable of providing measurement precision values as an indication of its real operating accuracy in conjunction with the measurement values that it provides. Field device 10 makes it possible to dynamically calculate the sensor error compared to the actual process variable. As a result, the operator of a process can assess not only whether measurements indicate the processes are within prescribed limits, but also whether the field devices that make the measurements are operating within a required performance limit.

**Claims**

1.  A field device (10) comprising:

    a sensor (12) for sensing a process parameter;
    a processor (16) for producing a measurement value as a function of the process parameter sensed, and calculating a measurement precision value for the measurement value based upon stored coefficients and data related to operating conditions of the field device (10); and
    a communication interface (26) for transmitting a field device measurement output based upon the measurement value and a diagnostic output based upon the measurement precision value,
    wherein the measurement precision value comprises a total probable error (TPE) of the field device (10), wherein the total probable error (TPE) is calculated by the processor (16) based upon a stored reference accuracy of the sensor (12) and a temperature effect related to temperature of the field device (10);

    **characterised in that**;

    the measurement precision value further comprises a stability error (SE), wherein the stability error (SE) is calculated based upon a stability error coefficient and an operating time reference since a last calibration of the field device (10), further comprising:

a time reference (24) for providing the operating time reference for use by the processor (16) in calculating the stability error (SE).

2. The field device (10) of claim 1, wherein the diagnostic output is a function of a comparison of the measurement precision value and a stored required performance limit.

3. The field device (10) of claim 1, wherein the diagnostic output provides an indication of a need for calibration of the field device (10), wherein the processor (16) identifies the occurrence of an out-of-range process parameter sensed by the sensor (12) and causes the diagnostic output to provide an indication of a need for calibration of the field device (10), and further the out-of-range process parameter is an overpressure, wherein the diagnostic output provides an indication of time until calibration of the field device (10) is needed.

4. The field device (10) of claim 1 and further comprising:

a local display (40) for displaying information based upon the measurement precision value.

5. The field device (10) of claim 4, wherein the local display (40) displays information including at least one of total probable error of the field device ($TPE_T$), total probable error of a primary element ($TPE_P$) associated with the field device (10), the stability error (SE), and a total calculated error (TCE), or displays a countdown to a next calibration of the field device (10), or wherein the processor (16) identifies the occurrence of an out-of-range process parameter sensed by the sensor (12) and causes the local display (40) to display an indication of the need for calibration of the field device (10), wherein the out-of-range process parameter is an overpressure.

6. The field device (10) of claim 1, wherein the process parameter is pressure and the total probable error (TPE) is calculated by the processor (16) based upon the stored reference accuracy, the temperature effect, and a static effect related to static line pressure.

7. The field device (10) of claim 6, wherein the measurement precision value further comprises a total probable error of a primary element ($TPE_P$) associated with the field device, wherein the total probable error of the primary element ($TPE_P$) is calculated by the processor (16) based upon a stored reference accuracy of the sensor (12) and a temperature effect related to temperature of the field device (10), and further wherein the process parameter is pressure and the total probable error of the primary element ($TPE_P$) is calculated by the processor (16) based upon the stored reference accuracy, the temperature effect, and a static effect related to static line pressure.

8. The field device (10) of claim 1, wherein the diagnostic output is transmitted as a secondary variable with each transmission of the field device measurement output.

9. A method of measuring process parameters, the method comprising:

sensing, by a sensor (12) comprised in a field device, a process parameter;
producing a measurement value representative of the process parameter sensed;
providing a measurement output based upon the measurement value;
calculating a measurement precision value for the measurement value based upon stored coefficients and data related to operating conditions of the field device (10); and
providing a measurement precision diagnostic output based upon the measurement precision value,
wherein the measurement precision value comprises a total probable error (TPE) of the field device (10), wherein the total probable error (TPE) is calculated based upon a stored reference accuracy of the sensor (12) and a temperature effect related to temperature of the field device (10),

**characterised in that**;

the measurement precision value further comprises a stability error (SE), wherein the stability error (SE) is calculated based upon a stability error coefficient and an operating time reference since a last calibration of the field device (10), further comprising:

providing, by a time reference (24), the operating time reference for use by a processor (12) of the field device in calculating the stability error (SE).

10. The method of claim 9, wherein the measurement precision value includes the total probable error (TPE), wherein the total probable error (TPE) is a function of a reference accuracy and a temperature effect, wherein the total probable error (TPE) is also a function of a static effect, or wherein the measurement precision value includes the stability error (SE).

11. The method of claim 9, wherein the providing measurement precision diagnostic output comprises:

comparing the measurement precision value to a required performance limit; and
producing the measurement precision diagnostic output as a function of the comparison.

12. The method of claim 9 and further comprising:

sensing occurrence of any out-of-range condition that affects calibration; and
causing the measurement precision diagnostic output to indicate a need for calibration when an out-of-range condition is sensed, wherein the measurement value is a pressure value, and the out-of-range condition is an overpressure condition.

13. The method of claim 9, wherein the measurement precision diagnostic output comprises a secondary variable communicated with the measurement output.

**Patentansprüche**

1. Feldgerät (10), welches aufweist:

einen Sensor (12) zum Abfühlen eines Prozessparameters;
einen Prozessor (16) zur Erzeugung eines Messwertes als Funktion des abgefühlten Prozessparameters und zum Berechnen eines Messgenauigkeitswertes für den Messwert beruhend auf gespeicherten Koeffizienten und Daten, die sich auf Betriebsbedingungen des Feldgerätes (10) beziehen; und
eine Kommunikationsschnittstelle (26) zum Übertragen einer Feldgerät-Messausgabe beruhend auf dem Messwert und einer Diagnostik-Ausgabe beruhend auf dem Messgenauigkeitswert,
wobei der Messgenauigkeitswert einen gesamten wahrscheinlichen Fehler (TPE) des Feldgeräts (10) aufweist,
wobei der gesamte wahrscheinliche Fehler (TPE) durch den Prozessor (16) beruhend auf einer gespeicherten Messgenauigkeit des Sensors (10) und einem sich auf die Temperatur des Feldgerätes (10) beziehenden Temperatureffekt berechnet wird;

**dadurch gekennzeichnet, dass**

der Messgenauigkeitswert weiter einen Stabilitätsfehler (SE) aufweist, wobei der Stabilitätsfehler (SE) beruhend auf einem Stabilitätsfehlerkoeffizienten und einer Betriebszeitreferenz seit einer letzten Kalibrierung des Feldgerätes (10) berechnet wird, weiter aufweisend:

eine Zeitreferenz (24) zur Bereitstellung der Betriebszeitreferenz zur Nutzung durch den Prozessor (10) bei der Berechnung des Stabilitätsfehlers (SE).

2. Feldgerät (10) nach Anspruch 1, wobei die Diagnostik-Ausgabe eine Funktion eines Vergleichs des Messgenauigkeitswertes mit einer gespeicherten Leistungserfordernis-Grenze ist.

3. Feldgerät (10) nach Anspruch 1, wobei die Diagnostik-Ausgabe eine Anzeige eines Kalibrierungsbedarfes des Feldgeräts (10) liefert, wobei der Prozessor (16) das Auftreten eines Außerhalb-des-Bereiches-Prozessparameters, abgefühlt durch den Sensor (12), identifiziert und bewirkt, dass die Diagnostik-Ausgabe eine Anzeige eines Kalibrierungsbedarfes des Feldgerätes (10) liefert, und weiter der Außerhalb-des-Bereiches-Prozessparameter ein Überdruck ist, wobei die Diagnostik-Ausgabe eine Anzeige einer Zeit liefert, bis zu der die Kalibrierung des Feldgerätes (10) erforderlich ist.

4. Feldgerät (10) nach Anspruch 1 und weiter aufweisend:

eine lokale Anzeige (40) zur Anzeige von auf dem Messgenauigkeitswert beruhender Information.

5. Feldgerät (10) nach Anspruch 4, wobei die lokale Anzeige (40) Information anzeigt, welche mindestens einen des gesamten wahrscheinlichen Fehlers des Feldgerätes ($TPE_t$), des gesamten wahrscheinlichen Fehlers eines Primärelementes ($TPE_t$), dem Feldgerät (10) zugeordnet, des Stabilitätsfehlers (SE) und eines gesamten berechneten Fehlers (TCE) einschließt oder einen Countdown zu einer nächsten Kalibrierung des Feldgerätes (10) anzeigt, oder wobei der Prozessor (10) das Auftreten eines Außerhalb-des-Bereiches-Prozessparameters, abgefühlt durch den Sensor (12), identifiziert und bewirkt, dass die lokale Anzeige (40) eine Anzeige des Kalibrierungsbedarfes des Feldgerätes (10) liefert, wobei der Außerhalb-des-Bereiches-Prozessparameter ein Überdruck ist.

6. Feldgerät (10) nach Anspruch 1, wobei der Prozessparameter der Druck ist und der gesamte wahrscheinliche Fehler (TPE) durch den Prozessor (16) beruhend auf der gespeicherten Referenzgenauigkeit, dem Temperatureffekt und einem sich auf dem Leitungsdruck beziehenden statischen Effekt berechnet wird.

7. Feldgerät (10) nach Anspruch 6, wobei der Messgenauigkeitswert weiter einen gesamten wahrscheinlichen Fehler eines Primärelementes ($TPE_p$) aufweist, das dem Feldgerät zugeordnet ist, wobei der gesamte wahrscheinliche Fehler des Primärelementes ($TPE_p$) durch den Prozessor (16) beruhend auf einer gespeicherten Referenzgenauigkeit des Sensors (12) und einem sich auf die Temperatur des Feldgerätes (10) beziehenden Temperatureffekt berechnet wird, und wobei weiterhin der Prozessparameter der Druck ist und der gesamte wahrscheinliche Fehler des Primärelementes ($TPE_p$) durch den Prozessor (16) beruhend auf der gespeicherten Referenzgenauigkeit, dem Temperatureffekt und einem sich auf den statischen Leitungsdruck beziehenden statischen Effekt berechnet wird.

8. Feldgerät (10) nach Anspruch 1, wobei die Diagnostik-Ausgabe als eine sekundäre Variable mit jeder Übertragung der Feldgerät-Messausgabe übertragen wird.

9. Verfahren zur Messung eines Prozessparameters, wobei das Verfahren aufweist:

Abfühlen eines Prozessparameters durch einen in dem Feldgerät enthaltenen Sensor (12);
Erzeugen eines Messwertes, welcher den abgefühlten Prozessparameter repräsentiert;
Bereitstellen einer Messausgabe beruhend auf dem Messwert;
Berechnen eines Messgenauigkeitswertes für den Messwert, beruhend auf gespeicherten Koeffizienten und Daten, die sich auf die Betriebsbedingungen des Feldgerätes (10) beziehen; und
Bereitstellen einer Messgenauigkeits-Diagnostikausgabe, beruhend auf dem Messgenauigkeitswert,
wobei der Messgenauigkeitswert einen gesamten wahrscheinlichen Fehler (TPE) des Feldgerätes (10) aufweist,
wobei der gesamte wahrscheinliche Fehler (TPE) basierend auf einer gespeicherten Referenzgenauigkeit des Sensors (12) und eines sich auf die Temperatur des Feldgerätes (10) beziehenden Temperatureffekt berechnet wird,

**dadurch gekennzeichnet, dass**

der Messgenauigkeitswert weiter einen Stabilitätsfehler (SE) aufweist, wobei der Stabilitätsfehler (SE) basierend auf einem Stabilitätsfehlerkoeffizienten und einer Betriebszeitreferenz seit einer letzten Kalibrierung des Feldgerätes (10) berechnet wird, weiter aufweisend:

Bereitstellen, durch eine Zeitreferenz (24), der Betriebszeitreferenz zur Nutzung durch den Prozessor (12) des Feldgerätes bei der Berechnung des Stabilitätsfehlers (SE).

10. Verfahren nach Anspruch 9, wobei der Messgenauigkeitswert den gesamten wahrscheinlichen Fehler (TPE) einschließt, wobei der gesamte wahrscheinliche Fehler (TPE) eine Funktion einer Referenzgenauigkeit und eines Temperatureffekts ist, wobei der gesamte wahrscheinliche Fehler (TPE) auch eine Funktion eines statischen Effekts ist oder wobei der Messgenauigkeitswert den Stabilitätsfehler (SE) einschließt.

11. Verfahren nach Anspruch 9, wobei das Bereitstellen der Messgenauigkeits-Diagnostikausgabe aufweist:

Vergleichen des Messgenauigkeitswertes mit einer
Leistungserfordernisgrenze; und
Erzeugen der Messgenauigkeits-Diagnostikausgabe als Funktion des Vergleiches.

**12.** Verfahren nach Anspruch 9 und weiter aufweisend:

Abfühlen des Auftretens eines Außerhalb-des-Bereiches-Zustandes, der eine Kalibrierung beeinflusst; und Bewirken, dass die Messgenauigkeits-Diagnostikausgabe einen Kalibrierungsbedarf anzeigt, wenn ein Außerhalb-des-Bereiches-Zustand abgefühlt wird, wobei der Messwert ein Druckwert ist und der Außerhalb-des-Bereiches-Zustand ein Überdruck-Zustand ist.

**13.** Verfahren nach Anspruch 9, wobei die Messgenauigkeits-Diagnostikausgabe eine sekundäre Variable aufweist, die mit der Messausgabe kommuniziert wird.

**Revendications**

**1.** Dispositif de terrain (10) comprenant :

un capteur (12) pour détecter un paramètre de process ;
un processeur (16) pour produire une valeur de mesure en tant que fonction du paramètre de process détecté, et pour calculer une valeur de précision de mesure pour la valeur de mesure sur la base de coefficients stockés et de données en relation avec les conditions opératoires du dispositif de terrain (10) ; et
une interface de communication (26) pour transmettre une sortie de mesure du dispositif de terrain basée sur la valeur de mesure et une sortie de diagnostic basée sur la valeur de précision de mesure,
dans lequel la valeur de précision de mesure comprend une erreur probable totale (TPE) du dispositif de terrain (10), ladite erreur probable totale (TPE) étant calculée par le processeur (16) sur la base d'une fiabilité de référence stockée du capteur (12) et d'un effet de température en relation avec la température du dispositif de terrain (10);

**caractérisé en ce que**

la valeur de précision de mesure comprend en outre une erreur de stabilité (SE), telle que l'erreur de stabilité (SE) est calculée sur la base d'un coefficient d'erreur de stabilité et d'une référence temporelle de fonctionnement depuis un dernier calibrage du dispositif de terrain (10), comprenant en outre :

une référence temporelle (24) pour fournir la référence temporelle de fonctionnement à utiliser par le processeur (16) lors du calcul de l'erreur de stabilité (SE).

**2.** Dispositif de terrain (10) selon la revendication 1, dans lequel la sortie de diagnostic et une fonction d'une comparaison de la valeur de précision de mesure et d'une limite de performance requise stockée.

**3.** Dispositif de terrain (10) selon la revendication 1, dans lequel la sortie de diagnostic fournit une indication d'un besoin de calibrage du dispositif de terrain (10), dans lequel le processeur (16) identifie l'apparition d'un paramètre de process hors limites détecté par le capteur (12), et amène la sortie de diagnostic à fournir une indication d'un besoin de calibrage du dispositif de terrain (10), et le paramètre de process hors limites est en outre une surpression, dans lequel la sortie de diagnostic fournit une indication du temps jusqu'auquel un calibrage du dispositif de terrain (10) est nécessaire.

**4.** Dispositif de terrain (10) selon la revendication 1, comprenant en outre :

un affichage local (40) pour afficher une information basée sur la valeur de précision de mesure.

**5.** Dispositif de terrain (10) selon la revendication 4, dans lequel l'affichage local (40) affiche une information incluant au moins une erreur parmi l'erreur probable totale du dispositif de terrain ($TPE_T$), l'erreur probable totale d'un élément primaire ($TPE_P$) associé avec le dispositif de terrain (10), l'erreur de stabilité (SE), et une erreur calculée totale (TCE), ou affiche un compte à rebours jusqu'à un prochain calibrage du dispositif de terrain (10), ou dans lequel le processeur (16) identifie l'apparition d'un paramètre de process hors limites détecté par le capteur (12), et amène l'affichage local (40) à afficher une indication du besoin de calibrage du dispositif de terrain (10), dans lequel le paramètre de process hors limites est une surpression.

**6.** Dispositif de terrain (10) selon la revendication 1, dans lequel le paramètre de process est une pression et l'erreur probable totale (TPE) est calculée par le processeur (16) sur la base de la fiabilité de référence stockée, de l'effet de température, et d'un effet statique en relation avec la pression statique en ligne.

7. Dispositif de terrain (10) selon la revendication 6, dans lequel la valeur de précision de mesure comprend en outre une erreur probable totale d'un élément primaire ($TPE_P$) associé avec le dispositif de terrain, dans lequel l'erreur probable totale de l'élément primaire ($TPE_P$) est calculée par le processeur (16) sur la base d'une fiabilité de référence stockée du capteur (12) et d'un effet de température en relation avec la température du dispositif de terrain (10), et en outre dans lequel le paramètre de process est la pression et l'erreur probable totale de l'élément primaire ($TPE_P$) est calculée par le processeur (16) sur la base de la fiabilité de référence stockée, de l'effet de température, et d'un effet statique en relation avec la pression statique en ligne.

8. Dispositif de terrain (10) selon la revendication 1, dans lequel la sortie de diagnostic est transmise comme une variable secondaire avec chaque transmission de la sortie de mesure du dispositif de terrain.

9. Procédé de mesure de paramètres de process, le procédé comprenant les étapes consistant à :

   détecter, par un capteur (12) compris dans un dispositif de terrain, un paramètre de process ;
   produire une valeur de mesure représentative du paramètre de process détecté ;
   fournir une sortie de mesure basée sur la valeur de mesure ;
   calculer une valeur de précision de mesure pour la valeur de mesure basée sur des coefficients stockés et sur des données en relation avec les conditions de fonctionnement du dispositif de terrain (10) ; et
   fournir une sortie de diagnostic de précision de mesure sur la base de la valeur de précision de mesure, dans lequel la valeur de précision de mesure comprend une erreur probable totale (TPE) du dispositif de terrain (10), dans laquelle l'erreur probable totale (TPE) est calculée sur la base d'une fiabilité de référence stockée du capteur (12) et d'un effet de température en relation avec la température du dispositif de terrain (10),

   **caractérisé en ce que**

   la valeur de précision de mesure comprend en outre une erreur de stabilité (SE), ladite erreur de stabilité (SE) étant calculée sur la base d'un coefficient d'erreur de stabilité et d'une référence temporelle de fonctionnement depuis un dernier calibrage du dispositif de terrain (10), comprenant en outre :

   l'étape consistant à fournir, par une référence temporelle (24), la référence temporelle de fonctionnement à utiliser par un processeur (12) du dispositif de terrain lors du calcul de l'erreur de stabilité (SE).

10. Procédé selon la revendication 9, dans lequel la valeur de précision de mesure inclut l'erreur probable totale (TPE), dans lequel l'erreur probable totale (TPE) est une fonction d'une fiabilité de référence et d'un effet de température, dans lequel l'erreur probable totale (TPE) est également fonction d'un effet statique, ou dans lequel la valeur de précision de mesure inclut l'erreur de stabilité (SE).

11. Procédé selon la revendication 9, dans lequel l'étape de fourniture de sortie de diagnostic de précision de mesure comprend les opérations consistant à :

   comparer la valeur de précision de mesure à une limite de performance requise ; et
   produire la sortie de diagnostic de précision de mesure en tant que fonction de la comparaison.

12. Procédé selon la revendication 9, comprenant en outre les opérations consistant à :

   détecter l'apparition d'une condition hors limites qui affecte le calibrage ; et
   amener la sortie de diagnostic de précision de mesure à indiquer un besoin de calibrage quand une condition hors limites est détectée, dans lequel la valeur de mesure est une valeur de pression, et la condition hors limites est une condition de surpression.

13. Procédé selon la revendication 9, dans lequel la sortie de diagnostic de précision de mesure comprend une variable secondaire communiquée avec la sortie de mesure.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008270162 A1
- WO 2008039203 A1